# NEUE EUROPÄISCHE PATENTSCHRIFT

(11) **EP 1 192 355 B2**
(45) Veröffentlichungstag und Bekanntmachung des Hinweises auf die Entscheidung über den Einspruch: **21.10.2015**
(45) Hinweis auf die Patenterteilung: 10.11.2004
(21) Anmeldenummer: 00922513.7
(22) Anmeldetag: 11.03.2000
(51) Int. Cl.: F03D 7/00, F03D 11/00

(54) **WINDENERGIEANLAGE MIT SCHALLPEGELREGELUNG**
WIND ENERGY SYSTEM WITH ADJUSTMENT OF THE SOUND LEVEL
EOLIENNE AVEC REGULATION DU NIVEAU SONORE

(30) Priorität: 10.06.1999 DE 19926437; 11.06.1999 DE 19926553
(43) Veröffentlichungstag der Anmeldung: 03.04.2002
(60) Teilanmeldung: 03024740.7
(73) Patentinhaber: Wobben, Aloys, 26607 Aurich (DE)
(72) Erfinder: Wobben, Aloys, 26607 Aurich (DE)
(74) Vertreter: Eisenführ Speiser
(86) Internationale Anmeldenummer: PCT/EP2000/002159
(87) Internationale Veröffentlichungsnummer: WO 2000/077395

(56) Entgegenhaltungen:
- WO-A-96/30669
- GB-A- 2 308 867
- US-A- 5 315 159
- PATENT ABSTRACTS OF JAPAN vol. 004, no. 096 (M-020), 11. Juli 1980 (1980-07-11) & JP 55 054678 A (MATSUMOTO TOKIO), 22. April 1980 (1980-04-22)
- "Sound from Wind Turbines" DANISH WIND TURBINE MANUFACTURERS ASSOCIATION WEB SITE, [Online] Seite 1-3 XP002142351 Gefunden im Internet: <URL:http://www.windpower.dk/tour/env/soun d.htm> [gefunden am 2000-07-11]
- 10 September 1998 vol. 'Baugenehmigung des Kreises Düren; Vorhaben: Aufstellung von Windkraftanlagen(Windpark Halde Nierchen)'

## Beschreibung

Bei der Planung und der Realisierung von Windparks spielen die zu erwartenden Schallemissionen eine zunehmende wichtige Rolle für die Genehmigung und Akzeptanz. Die dazu nötigen Schallimmissionsberechnungen basieren in der Regel auf vermessenen Schalleistungspegeln (L_{w}) der Windenergieanlagen und werden mit gängigen Softwareprogrammen durchgeführt. Auch finden immer häufiger Schallimmissionsmessungen statt, so daß an einem bestimmten Immissionspunkt (außerhalb oder innerhalb des Windparks) der Schallpegel einer einzelnen Anlage oder der Schallpegel eines gesamten Windparks ermittelt werden kann. Ist der Immissionspunkt ein einzelnes Haus, eine Siedlung o.dgl., muß dort gemäß den gesetzlichen und ordnungspolitischen Vorschriften ein gewisser Schalleistungspegel wenigstens über bestimmte Zeiten, beispielsweise zwischen 22.00 Uhr abends und 6.00 Uhr morgens eingehalten werden. Auch ist es-nicht erlaubt, den Schalleistungspegel an einem Immissionspunkt, z.B. einer Siedlung, tagsüber über alle Maßen anwachsen zu lassen.

Dem Interesse, an einem oder mehreren Immissionspunkten die geforderten Schalleistungspegel einzuhalten, steht das Interesse des Windparkbetreibers gegenüber, mit dem Windpark die maximal größte Energieausbeute zu erzielen. Mittels einer nächtlichen Totalabschaltung aller Windenergieanlagen des Windparks wäre zwar der Einhaltung von Schallgrenzwerten genüge getan, der gesamte Windparkbetrieb wäre dann jedoch sehr ineffektiv.

Es ist daher Aufgabe der vorliegenden Erfindung, trotz Einhaltung der Schalleistungsgrenzwerte an einem oder mehreren Immissionspunkten den Energieertrag des Windparks je nach Uhrzeit, Windrichtung und/oder Windstärke zu maximieren. Die Aufgabe wird mittels eines Verfahrens nach Anspruch 1 gelöst. Vorteilhafte Weiterbildungen sind in den Unteransprüchen beschrieben.

Der Erfindung liegt die Erkenntnis zugrunde, daß die Schallemission einer Windenergieanlage von verschiedenen Parametern und Kategorien abhängt. Grob betrachtet kann die Schallentwicklung in zwei Kategorien unterteilt werden. Eine Kategorie ist die Tonhaltigkeit, d.h. die Schallentwicklung vom Maschinenteil (Antriebteil) der Windenergieanlage. Dies wird auch als sogenannter mechanischer Schall bezeichnet. Die andere Kategorie ist ein breitbandiges Geräusch der Windenergieanlage, hervorgerufen durch aerodynamischen Schall von den Rotorblättern und sonstige breitbandige Maschinengeräusche, z.B. von Lüftern.

Der sogenannte mechanische Schall kann von verschiedenen mechanischen Komponenten, wie z.B. Generator und/oder Getriebe herrühren. Der Schall wird z.B. über die Struktur der Anlage übertragen und von deren Oberflächen abgestrahlt. Dieser Schall hat in der Regel tonhaltigen Charakter, d.h. die Schallabstrahlung läßt sich einer bestimmten Frequenz zuordnen. Die Schallquellen können bestimmt werden, so daß entsprechende Gegenmaßnahmen getroffen werden können (z.B. Körperschallentkopplung).

Der Schalleistungspegel einer Windenergieanlage wird jedoch im wesentlichen von den aerodynamischen Geräuschen bestimmt, die von den Luftströmungen an den Rotorblättern hervorgerufen werden. Da sich die Schallentwicklung etwa in fünfter Potenz zur Blattspitzengeschwindigkeit verhält, bedeutet erhöhte Drehzahl immer auch erhöhte Schallemission. Dieses Geräusch weist ein breitbandiges Frequenzspektrum auf. Für einen Rotordurchmesser von 40m wurde eine Änderung des Schalleistungspegels um 1 dB(A) pro Rotorumdrehung in der Minute ermittelt. Hierbei ist zu beachten, daß eine Reduktion des Schall-Leistungspegels um 3dB(A) bereits eine Halbierung (akustisch hörbar) dieser Größe entspricht.

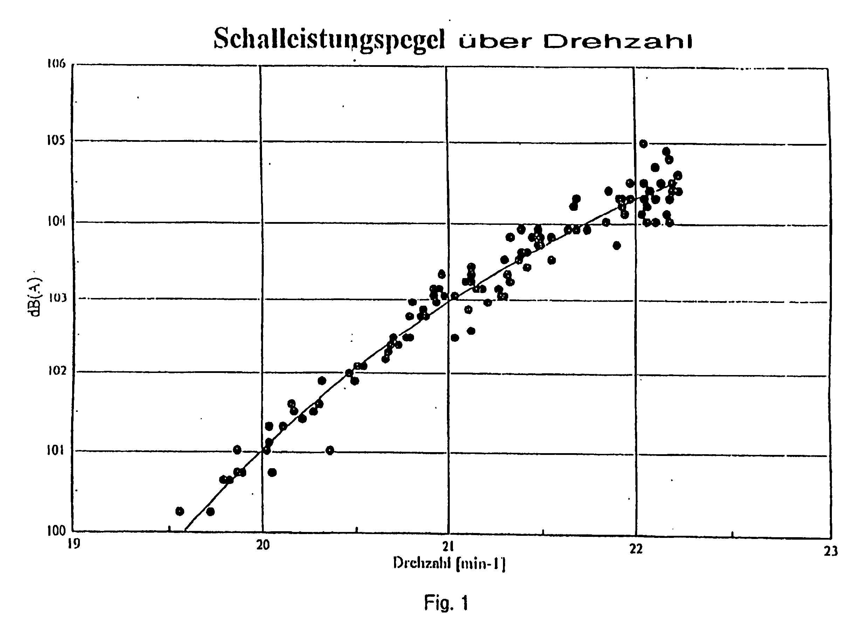

Die Abhängigkeit des Schalleistungspegels (in Dezibel) von der Drehzahl einer Windenergieanlage ist in Fig. 1 dargestellt. Hierbei handelt es sich um eine Windenergieanlage vom Typ E-66 der Firma Enercon. Es ist hierbei zu erkennen, daß bei einer Windenergieanlage dieses Typs bei einer Drehzahl von 22 Umdrehungen pro Minute der abgestrahlte Schall etwa 104 bis 105 dB beträgt, während der Schallleistungspegel bei einer Drehzahl von etwa 20 Umdrehungen pro Minute bereits auf etwa 101 dB absinkt.

Die gesetzlichen Bestimmungen zur Einhaltung der Schallgrenzwerte fordern je nach Standort (Wohn-, Misch-, Industriegebiet) und Uhrzeit bestimmte Werte. In der Regel sind z.B. zwischen 22 Uhr abends und 6 Uhr morgens deutlich niedrigere Werte einzuhalten als tagsüber.

Es wird daher vorgeschlagen, entweder den Systemwirkungsgrad einer Windenergieanlage zu erniedrigen, d. h. die gewünschte Generatorleistung bei geringeren Drehzahlen zu fahren (andere Drehzahl-Leistungskennlinie) oder, falls dies nicht ausreicht, die Drehzahl und damit indirekt auch die Generatorleistung zu reduzieren. Beide Möglichkeiten können mittels einer elektrischen Steuerung während der Nacht oder zu anderen kritischen Zeiten angewendet werden.

Eine getriebefreie, drehzahlvariable Windenergieanlage mit einstellbarer Drehzahl-Leistungskennlinie (beispielsweise vom Typ E-12, E-30, E-40, E-58, E-66 der Firma Enercon) in Verbindung mit der erfindungsgemäßen flexiblen Steuerung bietet die Möglichkeit, die Windenergieanlagen uhrzeitabhängig mit begrenzten Maximal-Drehzahlen und somit geringeren Schalleistungspegeln zu betreiben.

In einem Windpark mit einer Gruppe von mehreren Windenergieanlagen, die in mehreren Reihen aufgestellt sind, trifft der Wind unter bestimmten Windrichtungsbedingungen zuerst auf die erste Reihe von Windenergieanlagen. Diese entziehen dem Wind kinetische Energie und die Windgeschwindigkeit wird somit verringert. Die zweite Reihe von Anlagen, die hinter der ersten Reihe angeordnet sind (immer aus Sicht der Windrichtung) erfahren also eine kleinere Windgeschwindigkeit als die erste Reihe. Die nächste Reihe (usw.) erfährt eine noch geringere Windgeschwindigkeit. Entsprechend der Höhe der Windgeschwindigkeit verhält sich auch die Rotordrehzahl bei Anlagen mit variabler Drehzahl und damit verbunden sinkt die erzeugte elektrische Leistung mit schwächerem Wind bei solchen Anlagen, die hinter der ersten Reihe plaziert sind.

Somit ergibt sich schon aus der Aufstellung der Anlagen im Windpark eine Abstufung in den Schalleistungspegeln der einzelnen Anlagen.

Muß nun an einem oder mehreren Immissionspunkten außerhalb des Windparks die gesetzliche Vorschrift zur Einhaltung von maximalen Schallpegeln eingehalten werden, wird erfindungsgemäß zur Steuerung der einzelnen Anlagen des Windparks vorgeschlagen, daß diese so betrieben werden, daß am Immissionspunkt (oder an den Immissionspunkten) die ankommenden Gesamt-Schallpegel so niedrig sind, daß vorgegebene Grenzwerte eingehalten werden.

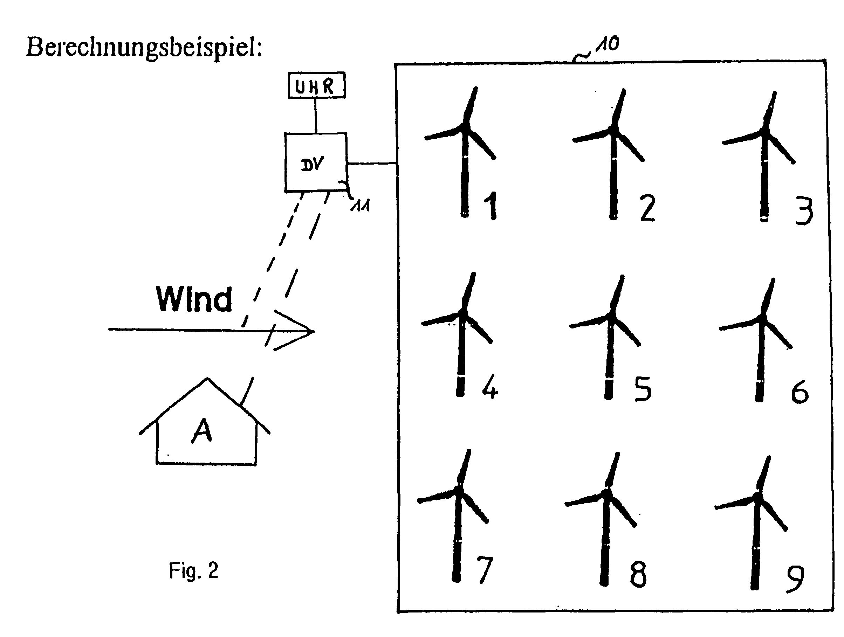

Fig. 2 zeigt ein Beispiel eines Windparks, bei dem jeweils drei Windenergieanlagen in drei Reihen angeordnet sind. Als Immissionspunkt A sei ein einzelstehendes Haus angenommen und der Wind trifft auf den Windpark aus Richtung des Hauses, also des Immissionspunktes A. Aus oben erwähnten Gründen ist die Windgeschwindigkeit für die Anlagen der ersten Reihe (Nr. 1, 4, 7) am größten, während der Wind auf die Anlagen in den nachfolgenden Reihen mit einer geringeren Windgeschwindigkeit trifft. Durch die höhere Windgeschwindigkeit wäre ohne die erfindungsgemäße Steuerung auch die Drehzahl der Anlagen der ersten Reihe größer als die Drehzahl der Anlagen der zweiten Reihe. Aus den bereits beschriebenen Erwägungen hat dies zur Folge, daß die Windenergieanlagen der ersten Reihe den größten Schallpegel erzeugen, was bezüglich des Immissionspunktes um so schwerwiegender ist, weil die Anlagen der ersten Reihe diejenigen sind, die dem Immissionspunkt A am nächsten liegen.

Wie aus Fig. 2 zu entnehmen ist, wird der Windpark 10 mit den Windenergieanlagen 1 - 9 mittels einer Datenverarbeitungseinrichtung (z.B. Computer) 11 gesteuert. Die Datenverarbeitungseinrichtung verarbeitet u.a. auch Werte über die Windrichtung, Windgeschwindigkeit, Uhrzeit sowie Schallpegel, die am Immissionspunkt A gemessen wurden oder aufgrund von vorherigen Messungen dort angenommen werden können. Die Werte für die Windgeschwindigkeit bzw. Windrichtung können auch von entsprechenden Meßeinrichtungen an den Windenergieanlagen übermittelt werden. Mittels der Datenverarbeitungseinrichtung ist die gesamte Steuerung aller Windenergieanlagen des Windparks möglich, und die Datenverarbeitungseinrichtung steuert je nach Ermittlung der Daten für Uhrzeit, Windrichtung, Windgeschwindigkeit und Schalleistungspegel am Immissionspunkt A Steuereinheiten der Windenergieanlagen 1 - 9, so daß deren Drehzahl reduziert wird bzw. die zu steuernde Anlage in einer anderen Drehzahl-Leistungskennlinie betrieben wird. Eine Verminderung der Drehzahl einer Windenergieanlage kann bedeuten, daß auch die Leistung entsprechend vermindert wird. Es ist durchaus möglich, daß bei verminderter Drehzahl die Leistung der Windenergieanlage gleich bleibt, weil gleichzeitig durch eine Pitchregelung der Rotorblätter (ist von Windenergieanlagen vom Typ E-40 bekannt) es auch möglich ist, die Windenergieanlagen mit einer anderen Drehzahl-Leistungskennlinie zu betreiben.

Bei der erfindungsgemäßen Windparksteuerung werden die Anlagen der ersten Reihe in ihrer Drehzahl drastisch reduziert, weil die Entfernung zum Haus A am nächsten ist und diese Anlagen daher den größten Beitrag zum Schallimmissionspegel liefern. Die Anlagen der zweiten Reihe (Nr. 2, 5, 8) erhalten dadurch eine höhere Windgeschwindigkeit und produzieren somit eine höhere Leistung. Ohne die erfindungsgemäße Regelung würde sich automatisch eine fallende Leistung bzw. ein fallender Schalleistungspegel der Windenergieanlage in Windrichtung ergeben. Mit der erfindungsgemäßen Steuerung (Regelung) der Windenergieanlage wird die natürliche Aufteilung mehr oder weniger gespiegelt, ohne dabei nennenswerte elektrische Arbeit (kWh) zu verlieren, weil die Leistung, um die die Anlagen der ersten Reihe beschnitten werden, von den Anlagen der folgenden Windreihen erbracht werden kann.

Dies sei an einem Berechnungsbeispiel näher erläutert. Hierbei wird die in Fig. 2 dargestellte Szenerie angenommen mit einem Windpark mit neun Windenergieanlagen vom Typ E-40 (Enercon), einer Windgeschwindigkeit in Reihe 1 (Anlagen 1, 4, 7) von 12m/sec. mit einem Abstand der Anlagen untereinander von jeweils 300m und mit einem Abstand der Anlage 2 zum Immissionspunkt A von 400m. Daraus ergibt sich bei Standardbetriebsweise folgende Verteilung von Leistung und Schalleistungspegel:

| | **Reihe 1** | **Reihe 2** | **Reihe 3** |
|---|---|---|---|
| | | | |
| Anlagennummern | 1/4/7 | 2/5/8 | 3/6/9 |
| Wind in Nabenhöhe [m/s] | 12 | 10,7 | 9,2 |
| Leistung [kW] | 462 | 365 | 235 |
| Schalleistungspegel [dB(A)] | 100,4 | 99,4 | 98,3 |

Der am Immissionspunkt A auftretende Schallpegel würde in diesem Fall etwa 42dB(A) betragen. Für den Fall, daß während des Nachtzeitraums ein Schallpegel von 40dB(A) am Immissionspunkt eingehalten werden muß, gibt es folgende Möglichkeiten.

Bei nicht drehzahlvariabel betriebenen Anlagen muß z.B. die dem Immissionspunkt A am nächsten liegende Anlage (Nr. 2) abgeschaltet werden. Hieraus resultiert der Verlust der durch diese Anlage ansonsten erzeugter Leistung.

Bei drehzahlvariabel zu betreibenden Anlagen vom Typ E-40 (diese Anlagen lassen sich auch mit verschiedenen Drehzahl-Leistungskennlinien fahren) und bei der erfindungsgemäßen Windparksteuerung kann die gesamte Reihe 1 des Windparks in der Drehzahl (und ggf. auch in der Leistung) reduziert werden, während entsprechend die beiden anderen Reihen aufgrund der sich dann einstellenden höheren Windgeschwindigkeiten mit erhöhter Leistung betrieben werden. Die dadurch ebenfalls erhöhten Schalleistungspegel der Anlagen der zweiten und dritten Reihe tragen jedoch aufgrund ihrer Entfernung nicht relevant zum Schallpegel am Immissionsort A bei. Hierbei stellen sich dann z.B. folgende Werte ein:

| Windpark gemäß Erfindung | **Reihe 1** | **Reihe 2** | **Reihe 3** |
|---|---|---|---|
| | | | |
| Anlagennummern | 1/4/7 | 2/5/8 | 3/6/9 |
| Wind in Nabenhöhe [m/s] | 12 | 11,4 | 10,7 |
| Leistung [kW] | 210 | 280 | 365 |
| Schalleistungspegel [dB(A)] | 98,0 | 98,5 | 99,4 |

Damit ergibt sich am Immissionsort A ein Schallpegel von etwa 40dB(A) ohne Abschaltung einer Anlage.

Der besondere Vorteil des erfindungsgemäßen Windparkbetriebsverfahrens liegt darin, daß bei Planung von Windparks mit knapp (oder schwer) einzuhaltenen Schallimmissionspegeln etwas großzügiger geplant werden kann, da Schallgrenzwerte im wesentlichen nur nachts eingehalten werden müssen. Dies erlaubt unter Umständen auch die Aufstellung von einer Anlage mehr (als was sonst möglich wäre), was sich positiv auf die Wirtschaftlichkeit eines Windparkprojektes auswirken kann, weil die vorhandene Windparkfläche besser ausgenutzt wird.

## Patentansprüche

1. Verfahren zum Betrieb eines Windparks (10) mit mehr als zwei Windenergieanlagen (1-9), die drehzahlvariabel sind und die in einem unterschiedlichen Abstand zu einem vorbestimmten Immissionspunkt (A) angeordnet sind, wobei erste Windenergieanlagen in Windrichtung vor zweiten Windenergieanlagen stehen, wobei die Windrichtung und die Windgeschwindigkeit erfasst werden, wobei in Abhängigkeit der Uhrzeit, Windrichtung Windgeschwindigkeit und Schallleistungspegel am Immissionspunkt die Drehzahl der ersten Windenergieanlagen (1-9) derart eingestellt wird, dass an dem Immissionspunkt (A) ein vorbestimmter Schallpegel nicht überschritten wird, wobei der Windpark mit den Windenergieanlagen (1-9) mittels einer Datenverarbeitungseinrichtung (11) gesteuert wird, wobei die Datenverarbeitungseinrichtung Werte für Windrichtung, Windgeschwindigkeit, Uhrzeit und Schalleistungspegel verarbeitet, und mittels der Datenverarbeitungseinrichtung die gesamte Steuerung aller Windenergieanlagen (1-9) des Windparks (10) erfolgt und die Datenverarbeitungseinrichtung je nach Ermittlung der Daten für Uhrzeit, Windrichtung, Windgeschwindigkeit und Schallleistungspegel am Immissionspunkt (A) mittels Steuereinheiten derie Windenergieanlagen (1-9) diese so einstellt, dass die Drehzahl der ersten Windenergieanlagen (3, 6, 9) verringert wird, wobei bei einem Wind, dessen Windrichtung im Wesentlichen vom Immissionspunkt (A) zum Windpark (10) verläuft, der Wind zuerst auf die ersten Windenergieanlagen trifft und diese Windenergieanlagen (1, 4, 7), die dem Immissionspunkt (A) am nächsten liegen, in ihrer Drehzahl verringert werden so dass die zweiten Windenergieanlagen, die in Windrichtung hinter den ersten Windenergieanlagen stehen, den Wind mit einer höheren Windgeschwindigkeit erfahren.

2. Verfahren nach einem der vorhergehenden Ansprüche,
**dadurch gekennzeichnet, dass** bei einer Verringerung der Drehzahl einzelner Windenergieanlagen (1-9) die Gesamtleistung des Windparks (10) nicht oder nur geringfügig, beispielsweise bis zu 25% reduziert wird.

3. Windpark mit wenigstens zwei Windenergieanlagen,
bei dem die Windenergieanlagen (1-9) des Windparks (10) mit einem Verfahren nach einem der vorhergehenden Anspruche gesteuert werden.

## Claims

1. Method for operation of a windpark (10) having more than two wind energy installations (1-9) which are of variable rotation speed and which are arranged at different distances from a predetermined immission point (A), with first wind energy installations being located in front of second wind energy installations in the wind direction, with the wind direction and the wind speed being detected, with the rotation speed of the first wind energy installations (1-9) being set as a function of the clock time, wind direction, wind speed and sound power level at the immission point such that a predetermined sound level is not exceeded at the immission point (A), with the windpark with the wind energy installations (1-9) being controlled by means of a data processing means (11), with the data processing means processing values for wind direction, wind speed, clock time and sound power level, and the entire control of all the wind energy installations (1-9) of the windpark taking place by means of the data processing means and the data processing means, depending on the determination of the data for clock time, wind direction, wind speed and sound power level at the immission point (A), by means of control units of the wind energy installations (1-9), setting the latter such that the rotation speed of the first wind energy installations (3, 6, 9) is reduced, with, in the case of a wind whose wind direction runs essentially from the immission point (A) to the windpark (10), the wind initially striking the first wind energy installations and these wind energy installations (1, 4, 7), which are located closest to the immission point (A), have their rotation speed reduced, so that the second wind energy installations, which are behind the first installations in the wind direction, are subjected to the wind at a higher wind speed.

2. Method according to one of the preceding claims,
**characterized in that**, if the rotation speed of individual wind energy installations (1-9) is reduced, the total power of the windpark (10) is not reduced, or is reduced only slightly, for example by up to 25%.

3. Windpark having at least two wind energy installations,
in which the wind energy installations (1-9) in the windpark (10) are controlled by means of a method according to one of the preceding claims.

## Revendications

1. Procédé de fonctionnement d'un parc éolien (10) comprenant plus de deux éoliennes (1-9), qui sont à vitesse variable et qui sont disposées selon un écart différent par rapport à un point d'émission (A) prédéterminé, les premières éoliennes étant placées dans la direction du vent devant les secondes éoliennes, la direction du vent et la vitesse du vent étant détectées, en fonction de l'heure, de la direction du vent, de la vitesse du vent et du niveau sonore, la vitesse des premières éoliennes (1-9) au niveau du point d'émission étant réglée de telle sorte qu'au niveau du point d'émission (A), un niveau sonore prédéterminé ne soit pas dépassé, le parc éolien avec les éoliennes (1-9) étant commandé à l'aide d'un dispositif de traitement de données (11), le dispositif de traitement des données traitant des valeurs pour la direction du vent, la vitesse du vent, l'heure et le niveau sonore, et la commande entière de toutes les éoliennes (1-9) du parc éolien (10) étant effectuée à l'aide du dispositif de traitement de données et le dispositif de traitement de données réglant celles-ci selon la détermination de données pour l'heure, la direction du vent, la vitesse du vent et le niveau sonore au niveau du point d'émission (A) à l'aide d'unités de commande des éoliennes (1-9) de sorte que la vitesse des premières éoliennes (3, 6, 9) soit réduite dans le cas d'un vent dont la direction s'étend sensiblement depuis le point d'émission (A) vers le parc éolien (10), le vent rencontrant d'abord les premières éoliennes, et la vitesse de ces éoliennes (1, 4, 7) qui sont les plus proches du point d'émission (A) étant réduite de sorte que les secondes éoliennes qui sont placées dans la direction du vent derrière les premières éoliennes subissent le vent avec une vitesse du vent supérieure.

2. Procédé selon l'une quelconque des revendications précédentes, **caractérisé en ce que** dans le cas d'une baisse de la vitesse d'éoliennes individuelles (1-9), la puissance totale du parc éolien (10) n'est pas ou que légèrement réduite, par exemple jusqu'à 25 %.

3. Parc éolien comprenant au moins deux éoliennes, dans lequel les éoliennes (1-9) du parc éolien (10) sont commandées avec un procédé selon l'une quelconque des revendications précédentes.
